# EUROPÄISCHE PATENTANMELDUNG

(11) **EP 0 596 379 A1**
(43) Veröffentlichungstag der Anmeldung: **11.05.1994**
(21) Anmeldenummer: 93117297.7
(22) Anmeldetag: 26.10.1993
(51) Int. Cl.: C08J 5/04, C08K 7/02

(54) **Kunststoff-Formmasse zur Herstellung von Formteilen mit farblich abstimmbarem Dekoreffekt**

(30) Priorität: 31.10.1992 DE 4236869
(71) Anmelder: HOECHST AKTIENGESELLSCHAFT, D-65929 Frankfurt am Main (DE)
(72) Erfinder: Reuter, Frank, D-63762 Grossostheim (DE); Mohr-Matuschek, Ulrich, Dr., D-65779 Kelkheim/Ts. (DE); Strohm, Christiane, D-65187 Wiesbaden (DE)

(57) **Zusammenfassung**

Eine Kunststoff-Formmasse, welche 0,2 bis 7,5 Gew.-% pflanzlicher Naturfasern mit einer Faserlänge von 0,1 bis 15 mm enthält, läßt sich zu Formteilen mit einem farblich abstimmbaren Dekoreffekt verarbeiten, wobei die gute thermische und mechanische Belastbarkeit und Einfärbbarkeit der pflanzlichen Naturfasern einen besonderen Vorteil darstellt. Diese Formteile finden insbesondere Anwendung im Kraftfahrzeug-Innenraum, eignen sich jedoch auch für andere Anwendungszwecke, wie beispielsweise für Haushaltskleingeräte, Gartenmöbel oder für Bürogeräte.

## Beschreibung

Die Erfindung bezieht sich auf eine thermoplastische Kunststoff-Formmasse zur Herstellung von Formteilen mit einem speziellen dekorativen Oberflächeneffekt. Die Formmasse kann mittels der üblichen Verarbeitungsverfahren wie Spritzgießen, Extrudieren und Extrusionsblasformen verarbeitet werden.

Sowohl Kfz-Innenverkleidungsteile als auch Gehäuse von Haushaltskleingeräten werden derzeit in der Regel im Spritzgießverfahren aus thermoplastischen Kunststoffen hergestellt. Dabei dringt in neuerer Zeit Polypropylen (PP) sowohl in Form von Standardtypen als auch in gefüllten, verstärkten oder modifizierten Produkttypen in eine immer größer werdende Zahl von Anwendungen ein.

Die thermoplastischen Werkstoffe sind in der Masse eingefärbt und die Fertigteile wegen des Aussehens (Design) und des Griffgefühls (Haptik) in sehr vielen Fällen mit einer Oberflächenstruktur (Narbung) versehen. Diese Narbung wird während des Spritzgießprozesses durch das Abformen entsprechender Gravuren erzeugt, welche in die Oberflächen der Kavität des Spritzgießwerkzeugs eingearbeitet sind. Das Resultat sind Formteile mit strukturierter, farblich aber homogener Oberflächenbeschaffenheit.

In der Masse eingefärbte Formteile mit Oberflächennarbungen stellen für viele Anwendungen eine ausreichende Lösung hinsichtlich Design- und Qualitätsanforderungen dar. Es besteht jedoch besonders für die Innenräume von Kraftfahrzeugen der Mittel- und der Oberklasse ein Bedarf an Formteilen, die hinsichtlich Optik und Komfort höheren Ansprüchen genügen können.

Zur Erzeugung anspruchsvollerer Oberflächen bei Formteilen für den Kfz-Innenraum kann man die Verkleidungsteile entweder lackieren (beispielsweise Softlackierung) oder mit Folien oder Textilmaterialien kaschieren. Die Kaschierung erfolgt jeweils mit Hilfe von Klebstoffen. Je nach Art des Trägerwerkstoffes ist zur Erzielung einer guten Haftfestigkeit noch eine Vorbehandlung der Formteile durch Abflammen, Corona-Entladung oder ähnliches erforderlich. Diese einzelnen Verfahrensschritte bedeuten einen relativ hohen Fertigungsaufwand. Ein weiterer, damit verbundener Nachteil liegt in dem ungünstigen Fogging-Verhalten.

Unter Fogging versteht man die Kondensation von (verdampften) flüchtigen Bestandteilen aus der Kfz-Innenausstattung an den Glasscheiben, insbesondere an der Windschutzscheibe. Die Fogging-Intensität ist naturgemäß abhängig von mehreren Faktoren und von den herrschenden Temperaturbedingungen. Da Klebstoffe häufig relativ hohe Anteile an flüchtigen Substanzen enthalten, stellen klebkaschierte Teile praktisch immer ein deutlich foggingförderndes Potential dar.

Ein weiterer Nachteil kann bei klebkaschierten Teilen hinsichtlich der Gestaltungsfreiheit auftreten. Aufgrund der teilweise nur begrenzten Verformbarkeit der Textilien bzw. Folien während des Kaschiervorganges sind gegebenenfalls Einschränkungen hinsichtlich der geometrischen Ausführung der Trägerteile zu berücksichtigen.

Es bestand daher die Aufgabe, einen thermoplastischen Werkstoff zu entwickeln, der mit den üblichen Kunststoff-Formgebungsverfahren verarbeitet werden kann. Die Oberflächen der Fertigteile sollen einen speziellen dekorativen, farblich abstimmbaren Effekt aufweisen (gesprenkelte Oberfläche, Melange-Effekt, Textil-Look).

Es ist grundsätzlich möglich, eingefärbtes Polypropylen, gegebenenfalls zusätzlich mit Verstärkungsstoffen wie Glasfasern oder Talkum und/oder Elastomeren modifiziert, mit andersfarbigen Fasern zu versehen. Es ist bekannt, daß thermisch und mechanisch gut beständige Fasern aus z.B. thermoplastischem Polyester, Polyamid oder Polyacrylnitril in einer Menge von ca. 0,5 bis 3 % zum Polypropylen zugemischt und mit dem Polymeren auf Extrudern homogen vermischt werden können. Daraus hergestellte und mit einer genarbten Oberfläche versehene Testplatten zeigten einen speziellen, an Textilien erinnernden Oberflächeneffekt, der sich an das Design von textilkaschierten Formteilen anpaßt. Versuche zur Herstellung von großflächigen Formteilen, bei denen geometrisch bedingt lange Fließwege vorhanden sind, waren jedoch unbefriedigend verlaufen. Der Grund waren nicht ausreichende thermische und mechanische Widerstandskraft der Polyester-, Polyamid- oder Polyacrylnitril-Fasern. Die beispielsweise beim Spritzgießen von Polypropylen erforderliche Verarbeitungstemperatur von ca. 230 bis 270 °C und die bei Schneckenspritzgießmaschinen während des Homogenisierens und beim Durchströmen von Heißkanälen und dünnen Anschnitten auftretende Materialscherung führten zu einer starken thermischen Schädigung der Fasern. Weiterhin kam es wegen dieser Scherkräfte, in Verbindung mit der hohen Temperatur, teilweise sogar zu einer Auflösung der Faser-Geometrie, wodurch der Eindruck einer textilähnlichen Oberfläche völlig verloren ging.

Wegen der Probleme bei der Verwendung der Polyester-, Polyamid- und Polyacrylnitril- -Fasern wurde vorgeschlagen, Kohlenstoff-Fasern zu verwenden (vgl. DE 42 21 208). Dabei wurde gefunden, daß bei Verwendung von Kohlenstoff-Fasern keine mechanischen oder thermischen Probleme auftreten und der gewünschte Dekoreffekt der Formteiloberfläche erreicht werden kann. Bei Verwendung von Kohlenstoff-Fasern läßt sich allerdings die für spezielle Dekorzwecke notwendige Einfärbung der Fasern nicht durchführen.

Es wurde nun gefunden, daß die Aufgabe durch Verwendung von pflanzlichen Naturfasern gelöst werden kann.

Die Verwendung beispielsweise von Flachsfasern zur Verstärkung von Polymeren ist an sich bekannt. Üblicherweise werden Mengen von 10 bis 50% als geschnittene Flachsfasern zu Polymeren zugegeben, um eine markante Erhöhung der mechanischen Eigenschaften (Biegefestigkeit, Elastizitätsmodul, Zugfestigkeit etc.) zu erreichen.

Die Erfindung betrifft somit eine Kunststoff-Formmasse zur Herstellung von Formteilen mit farblich abstimmbarem Dekoreffekt enthaltend
a) 100 bis 50 Gew.-% eines thermoplastischen Polymers,
b) 0 bis 50 Gew.-% Verstärkungs- und/oder Füllstoffe und 0,2 bis 7,5 Gew.-%, bezogen auf die Formmasse, pflanzlicher Naturfasern mit einer Faserlänge von 0,1 bis 15 mm.

Die erfindungsgemäße Kunststoff-Formmasse enthält ein thermoplastisches organisches Polymer, beispielsweise eines der nachstehend aufgeführten:
1. Polymere von Mono- und Diolefinen, beispielsweise Polyethylen hoher, mittlerer oder niederer Dichte (das gegebenenfalls vernetzt sein kann) oder Polypropylen.
2. Mischungen der unter 1) genannten Polymeren untereinander oder mit anderen Olefinpolymeren, beispielsweise Mischungen von Polypropylen mit Polyethylen, Copolymeren von Mono-und Diolefinen, wie beispielsweise Ethylen-Propylen-Copolymeren, Propylen-Buten-1-Copolymeren, Propylen-Isobutylen-Copolymeren, Ethylen-Buten-1-Copolymeren, Propylen-Butadien-Copolymeren, Isobutylen-Isopren-Copolymeren, sowie Terpolymeren von Ethylen mit Propylen und einem Dien, wie Hexadien, Dicyclopentadien oder Ethylidennorbornen.
3. Polystyrol.
4. Copolymere von Styrol oder a-Methylstyrol mit Dienen oder Acrylderivaten, wie beispielsweise Styrol-Butadien, Styrol-Maleinsäureanhydrid, Styrol-Acrylnitril, Styrol-Ethylmethacrylat, Styrol-Butadien-Ethylacrylat, Styrol-Acrylnitril-Methacrylat; Mischungen von hoher Schlagzähigkeit aus Styrol-Copolymeren und einem anderen Polymer, wie beispielsweise einem Polyacrylat, einem Dien-Polymeren oder einem Ethylen-Propylen-Dien-Terpolymeren; sowie BlockCopolymere des Styrols, wie beispielsweise Styrol-Butadien-Styrol, Styrol-Isopren-Styrol, Styrol-Ethylen/Butylen-Styrol oder Styrol-Ethylen/Propylen-Styrol.
5. Pfropfcopolymere von Styrol, wie beispielsweise Styrol auf Polybutadien, Styrol und Acrylnitril auf Polybutadien, Styrol und Maleinsäureanhydrid auf Polybutadien, Styrol und Alkylacrylate oder Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, die beispielsweise als sogenannte ABS-, MBS-, ASA- oder AES-Polymere bekannt sind.
6. Polyvinylchlorid.
7. Polyacetale, wie Polyoxymethylen, sowie solche Polyoxymethylene, die Comonomere wie beispielsweise Ethylenoxyd enthalten.
8. Polyphenylenoxyde und -sulfide und deren Mischungen mit Styrolpolymeren.
9. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte (Polyisocyanate-Polyole-Prepolymere).
10. Polyamide und Copolyamide, die sich von Diaminen und Dicarbonsäuren und/oder von Aminocarbonsäuren oder den entsprechenden Lactamen ableiten, wie Polyamid-4, Polyamid-6, Polyamid-6.6, Polyamid-6.10, Polyamid-11, Polyamid-12, Poly-2,4,4-trimethylhexamethylenter- ephthalamid, Poly-m-phenylen-isophthalamid, sowie deren Copolymere mit Polyethern, wie beispielsweise mit Polyethylenglykol, Polypropylenglykol oder Polytetramethylenglykol.
11. Polyester, die sich von Dicarbonsäuren und Diolen und/oder von Hydroxycarbonsäuren oder den entsprechenden Lactonen ableiten, wie Polyethylenterephthalat, Polybutylenterephthalat, Poly-1,4-dimethylolcyclohexan-terephthalat, Poly-(2,2-bis-(4-hydroxyphenyl)-propan- )terephthalat, Polyhydroxybenzoate, sowie Block-Polyether-ester, die sich von Polyethylen mit Hydroxyendgruppen, Dialkoholen und Dicarbonsäuren ableiten.
12. Polycarbonate und Polyestercarbonate.
13. Mischungen der oben erwähnten Polymeren, wie beispielsweise PP/EPDM, Polyamid-6/EPDM oder ABS, PVC/EVA, PVC/ABS, PVC/MBS, PC/ABS, PBTP/ABS, PC/ASA, PC/PBT, PVC/CPE, PVD/Acrylat, POM/thermoplastisches PUR, POM/Acrylat, POM/MBS, PPE/HIPS, PPE/Polyamid-6.6 und Copolymere, PA/HDPE, PA/PP, PA/PPE.

Bevorzugt sind die Olefinpolymeren, insbesondere Polypropylen.

Das Basismaterial für die erfindungsgemäße Formmasse besteht aus
a) 100 bis 50, vorzugsweise 90 bis 60 Gew.-% Polymer und
b) 0 bis 50, vorzugsweise 10 bis 40 Gew.-% Verstärkungs- und/oder Füllstoffe.

Vorzugsweise wird ein Homo- oder Copolymer des Propylens mit einem Schmelzindex MFI 230/5 nach DIN 53 735 von 0,5 bis 95 g/10 min verwendet.

Insbesondere besteht das Basismaterial aus
a) 95 bis 50, vorzugsweise 90 bis 70 Gew.-% isotaktischem Polypropylen oder Mischpolymerisaten des Propylens mit bis zu 15 Gew.-% Ethylen,
b) 5 bis 50, vorzugsweise 10 bis 30 Gew.-% kautschukartiger, mit Polypropylen verträglicher Mischpolymerisate und
c) 0 bis 50, vorzugsweise 10 bis 40 Gew.-% Verstärkungs- und/oder Füllstoffe.

Als kautschukartige Mischpolymerisate eignen sich vor allem amorphe Mischpolymerisate aus 30 bis 70 Gew.-% Ethylen und 70 bis 30 Gew.-% Propylen, Terpolymerisate aus Ethylen, Propylen und bis zu 5 Gew.-% Dienen, vorzugsweise Ethylidennorbornen oder 1,4-Hexadien, Mischpolymerisate aus Ethylen und 10 bis 45 Gew.-% Vinylacetat oder Blockcopolymere aus Styrol und Butadien oder Styrol und Isopren, die an beiden Molekülenden Polystyrolblöcke besitzen.

Als Verstärkungs- und/oder Füllstoffe werden vorzugsweise Talkum, Kreide, Glasfasern oder Glaskugeln eingesetzt.

In das Basismaterial werden erfindungsgemäß pflanzliche Naturfasern, wie beispielsweise Bastfasern, Hartfasern oder Pflanzenhaare, vorzugsweise Bastfasern, mit einer Länge von 0,1 bis 15 mm, vorzugsweise 1 bis 5 mm, und einem Durchmesser von 10 bis 30 um zum Erreichen eines dekorativen Effekts eingearbeitet. Die Zugabemenge beträgt 0,2 bis 7,5 Gew.-%, vorzugsweise 1 bis 3 Gew.-%, bezogen auf die gesamte Formmasse.

Geeignete pflanzliche Naturfasern sind Flachs, Hanf, Jute und Ramie, vorzugsweise Flachs.

Flachs ist die Bastfaser aus der Leinpflanze (Linum usitatissimum) und als technische Faser ca. 20 bis 140 cm lang und 0,1 bis 0,6 mm dick. Die Einzelfaser ist ca. 20 bis 50 mm lang und 10 bis 30 um dick. Flachs stellt einen nachwachsenden Rohstoff dar, der im Vergleich zu anderen Naturfasern wie Baumwolle, Hanf, Sisal hervorragende Steifigkeit und Festigkeit besitzt und in den mechanischen Eigenschaften nur von Ramie übertroffen wird. Flachsfasern lassen sich gut in unterschiedlichen Farben einfärben, sodaß auch helle Fasern in dunklen und dunkle Fasern in hellen Basisformmassen eingesetzt werden können.

Hanf ist eine Bastfaser aus der Hanfpflanze (Cannabis sativa). Die einzelne Bastfaser ist ca. 5 bis 55 mm lang und ca. 15 bis 30 um dick.

Jute wird als Bastfaser aus bestimmten Lindenarten in Indien gewonnen. Die Länge der Faserbündel beträgt 1,5 bis 2,5 m, die Einzelfasern sind 1 bis 5 mm lang und 10 bis 30 um dick.

Ramie ist die Bastfaser aus den Stengeln der Pflanzengattung Boehmeria. Die Einzelfasern sind 60 bis 250 mm lang.

Weiterhin geeignete pflanzliche Naturfasern sind Hartfasern wie beispielsweise Sisal, Manilahanf oder Kokosfasern und Pflanzenhaare wie beispielsweise Baumwolle oder Kapok.

Die erfindungsgemäße Formmasse kann weiterhin die üblichen, die Verarbeitung erleichternden und die physikalischen Eigenschaften verbessernden Zusatzstoffe enthalten. Als solche sind zu nennen Licht- und Wärmestabilisatoren, Antioxidantien, Antistatika, Gleitmittel, sowie Farbpigmente und Flammschutzmittel. Die erste Gruppe ist in der Formmasse im allgemeinen in einer Menge von 0,01 bis 5 Gew.-%, berechnet auf die Menge Polymer (plus Füllstoff) enthalten. Füllstoffe, Farbpigmente und Flammschutzmittel werden in einer Menge entsprechend den Bedürfnissen eingesetzt.

Als Verarbeitungsverfahren sind beispielsweise das Spritzgießen, die Extrusion und das Extrusionsblasverfahren geeignet.

Die Verarbeitungsbedingungen für die erfindungsgemäße Formmasse entsprechen den Bedingungen, die normalerweise bei der Verarbeitung der genannten Kunststoffe angewendet werden. Die Verarbeitungstemperaturen - gemessen unmittelbar nach dem Verlassen der Düse - liegen beispielsweise bei Polypropylen je nach Größe und Kompliziertheit des Formteils im Bereich von 240 und 280 _{°} C. Die Werkzeugtemperatur beträgt im allgemeinen 40 bis 70 _{°} C.

Für die Herstellung besonders großflächiger und verarbeitungstechnisch schwieriger Formteile können auch die für solche Artikel besonders hohen Verarbeitungstemperaturen gewählt werden, ohne daß eine Beeinträchtigung von Farbe oder Eigenschaften eintritt.

Es ist besonders hervorzuheben, daß die hervorragende Einfärbbarkeit der Flachsfasern in unterschiedlichsten Farben genutzt werden kann, um am Fertigteil speziell auf die Anwendung bzw. Umgebung abgestimmte Farb- und Dekoreffekte zu erreichen. Solche farbigen, testilähnliche Dekoreffekte eröffnen völlig neue Designmöglichkeiten beim Einsatz von unkaschierten Kunststoff-Formteilen.

Man erhält einen optimalen Effekt bei der Verwendung von Polymeren in weißen und sehr hellen Grautönen. Gute Ergebnisse lassen sich auch mit dunkel eingefärbten Fasern in relativ hell eingefärbten Basispolymeren (beispielsweise hellblau, hellbraun) erreichen. Der Effekt kann durch eine Oberflächenbehandlung der Formteile noch beeinflußt werden.

Es sind jedoch umgekehrt auch helle Fasern in dunkel eingefärbten Basisformmassen möglich.

Mit der erfindungsgemäßen Formmasse erschließen sich unter Einsatz der üblichen, wirtschaftlich vorteilhaften Verarbeitungsverfahren für Kunststoffe (wie z.B. das Spritzgießen) Anwendungen, die bisher aufwendiger (wie z.B. durch Klebkaschierung) hergestellten Formteilen vorbehalten waren. Formteile aus der erfindungsgemäßen Formmasse können insbesondere in Kraftfahrzeug-Innenräumen Verwendung finden. Sie eignen sich jedoch ebenso für andere Anwendungszwecke, wie beispielsweise in Haushaltskleingeräten oder Büro-und Kommunikationsgeräten. Aus der Vielzahl der Anwendungsmöglichkeiten werden im folgenden einige Beispiele aufgezählt:
o Kraftfahrzeug:
   - Türinnenverkleidungen,
   - Säulenverkleidungen, Einstiegsleisten,
   - Motorradkoffer.
o Büro:
   - Büromöbelformteile-(Rückenlehnen,Armgriffe,Stuhlbeine, Computergehäuse, Ventilatorgehäuse etc.),
   - Büromöbelfurniere,
   - Aktenkofferschalen.
o Haushalt:
   - Toastergehäuse,
   - Haushaltskaffeemaschinen,
   - Bügeleisen,
   - Gefrier- und Frischhaltegefäße, Schüsseln etc.,
   - Gartenmöbel.
o Bau:
   - Elektroinstallationsprogramme (wie Schalter, Schalterblenden etc.)

Die besonderen Vorteile der erfindungsgemäßen Formmassen sind:
- der hervorragende, teilweise textilähnliche Dekoreffekt (Melange-Effekt,Textil--Look),
- die überlegene Einfärbbarkeit der pflanzlichen Naturfasern vor der Beimischung für die farbliche Abstimmung des Dekoreffekts mit der Grundfarbe der Formmasse und/oder anderen umgebenden Dekorelementen bzw. Formteilen,
- die problemlose Verarbeitbarkeit ohne thermische oder mechanische Zersetzung und
- deutliche ökonomische Vorteile der pflanzlichen Naturfaser, beispielsweise gegenüber Kohlenstoff-Fasern.

Die nachfolgenden Beispiele sollen die Erfindung erläutern:

### Beispiel 1

### (Kraftfahrzeug-Säulenverkleidung)

Es wurde die Verkleidung einer A-Säule eines europäischen Mittelklasse-Pkw durch Spritzgießen gefertigt. Das Formteil hatte eine Länge von 1220 mm, eine Breite von 76 mm und eine Wanddicke von 2,3 mm. Das Anspritzen erfolgte mittig über drei, im Abstand von jeweils 12 mm angeordneten Punktanschnitten mit Durchmessern von je 1,5 mm. Es wurde mit einer Schmelzetemperatur von 270 bis 275 _{°} C gearbeitet, um trotz der langen Fließwege eine einwandfreie Füllung des Zweifachwerkzeuges zu erreichen. Die verwendete Spritzgießmaschine hatte eine Zuhaltekraft von 10000 kN. Der Schneckendurchmesser betrug 90 mm. Vom Einfülltrichter ausgehend waren die am Spritzgießzylinder eingestellten Temperaturen: 240, 260, 280, 280, 294 _{°} C. Der Gesamtzyklus betrug 60 sec.

Als Werkstoff wurde ein 20 Gew.-% Talkum enthaltendes Propylen-Copolymersat mit einem MFI 230/5 von 55 g/10 min in hellgrauer Grundeinfärbung benutzt, dem 1,5 Gew.-% schwarz eingefärbte Flachsfasern mit einer Faserlänge von 0,1 bis 4 mm und einem Durchmesser von 10 bis 30 um zugemischt waren. Die gewünschte optische Abstimmung der mit einer feinen Narbung versehenen Säulenverkleidung mit dem benachbarten textilkaschierten Dachhimmel wurde in vollem Umfang erreicht. Die geforderte Produktionssicherheit war trotz der erforderlichen relativ hohen Schmelzetemperatur vorhanden. Selbst bei Unterbrechungen der Produktion konnte keine durch den Faserzusatz hervorgerufene Farbverschiebung oder Eigenschaftsänderung beobachtet werden.

### Beispiel 2

### (Toastergehäuse)

Ebenfalls durch Spritzgießen wurde ein Toastergehäuse aus einer Formmasse in weißer Grundeinfärbung auf Basis eines Propylen-Homopolymerisats mit 10 Gew.-% Talkum hergestellt. Der Formmasse waren zudem 2 Gew.-% grün eingefärbte Flachsfasern beigemischt (Faserdurchmesser und Faserlänge wie in Beispiel 1). Das Formteil wurde auf einer Spritzgießmaschine mit 5000 kN Schließkraft gefertigt. Sämtliche Gehäusewände wurden als ein Teil in einer Ebene gespritzt, wobei die seitlichen Flächen mit einer Riffelung versehen waren. Die Stirnflächen des Gehäuses waren dagegen glatt. Durch Falten des Formteils an den drei eingearbeiteten Filmscharnieren um je 90 Grad wurde schließlich das Gehäuse hergestellt. Die Fixierung des gefalteten Gehäuses erfolgte durch Schnapphaken. Die Filmscharniere stellen spritztechnisch deutliche Fließhindernisse dar. Daher wurde ein Polypropylen mit einem MFI 230/5 von 85 g/10 min gewählt und bei einer Massetemperatur von 265 _{°} C verarbeitet. Trotz dieser relativ hohen Massetemperatur und der an den Engstellen der Filmscharniere auftretenden starken Materialscherung traten keine Farbänderungen oder andere störende Oberflächendefekte auf. Der vom Design geforderte Melange-Effekt in einem Mintfarbton wurde voll erreicht.

### Beispiel 3

### (Motorradkoffer)

Ein Motorradkoffer wurde doppelwandig in einem Stück im Extrusionsblasformverfahren aus hochschlagzähem, ungefülltem Propylen-Copolymerisat hergestellt. Beide Kofferschalen und die oben angeordnete Klappe sind mit durchgehenden Filmscharnieren verbunden. Das Extrusionsblasformverfahren und die angestrebte hohe Schlagzähigkeit des Fertigteils machten die Verwendung eines hochviskosen Materials mit einem MFI 230/5 von ca. 0,5 g/10 min erforderlich. Dem hellblauen Polypropylen-Basismaterial waren 2,8 Gew.-% Flachsfasern in dunkelblauer Einfärbung beigemischt (Faserlänge und Faserdurchmesser wie in Beispiel 1). Die Formmasse wurde bei 240 _{°}C verarbeitet. Nicht nur konstruktive Vorkehrungen, wie Doppelwandigkeit und das eingeschlossene Luftpolster, sondern auch der schlagzähe und steife Materialtyp bieten Stabilität und Schutzfunktion. Mit der flachsfasergefüllten Formmasse wurde in Verbindung mit einer besonderen Narbstruktur sowohl die für den Praxiseinsatz notwendige Kratzfestigkeit als auch die angestrebte Oberflächendekoration (Melange-Effekt) erreicht.

### Beispiel 4

### (Kfz-Einstiegsleisten)

Im kontinuierlichen Extrusionsverfahren wurde ein Kunststoffprofil gefertigt, das - auf 95 cm abgelängt - als Einstiegsleiste eines Mittelklasse-Pkw Verwendung findet. Zur optischen Abstimmung mit dem Teppichboden und den Innenverkleidungsteilen des Fahrzeugs wurde für die Einstiegsleiste ein dunkelgraues, mit 20 Gew.-% Glasfasern verstärktes Propylen-Copolymerisat verwendet, dem 1,5 Gew.-% schwarz eingefärbte Flachsfasern beigemischt waren. Die Fließfähigkeit des Materials war durch einen MFI 230/5 von 5,5 g/10 min gekennzeichnet. Die Massetemperatur am Extrusionswerkzeugaustritt betrug 240 °C. Bei der Verarbeitung des flachsfaser-modifizierten Materialtyps traten keinerlei Probleme auf. Die geriffelte Oberfläche der extrudierten Ware zeigte den gewünschten, textilähnlichen Dekoreffekt, der hervorragend sowohl mit dem Teppichboden als auch mit den Innenverkleidungen des Fahrzeugs harmonierte.

## Patentansprüche

1. Kunststoff-Formmasse zur Herstellung von Formteilen mit farblich abstimmbarem Dekoreffekt enthaltend
a) 100 bis 50 Gew.-% eines thermoplastischen Polymers,
b) 0 bis 50 Gew.-% Verstärkungs- und/oder Füllstoffe und 0,2 bis 7,5 Gew.-%, bezogen auf die Formmasse, pflanzlicher Naturfasern mit einer Faserlänge von 0,1 bis 15 mm.

2. Formmasse nach Anspruch 1, dadurch gekennzeichnet, daß sie Bastfasern mit einer Faserlänge von 0,1 bis 15 mm enthält.

3. Formmasse nach Anspruch 1, dadurch gekennzeichnet daß sie Flachsfasern mit einer Faserlänge von 0,1 bis 15 mm enthält.

4. Formmasse nach Anspruch 1, dadurch gekennzeichnet, daß sie
a) 95 bis 50 Gew.-% isotaktischem Polypropylen oder Mischpolymerisaten des Propylens mit bis zu 15 Gew.-% Ethylen,
b) 5 bis 50 Gew.-% kautschukartiger, mit Polypropylen verträglicher Mischpolymerisate,
c) 0 bis 50 Gew.-% Verstärkungs- und/oder Füllstoffe und 0,2 bis 7,5 Gew.-%, bezogen auf a) + b) + c), Flachsfasern mit einer Faserlänge von 0,1 bis 15 mm enthält.

5. Formmasse nach Anspruch 1, dadurch gekennzeichnet, daß die Verstärkungs- und/oder Füllstoffe Talkum, Kreide, Glasfasern oder Glaskugeln sind.

6. Formmasse nach Anspruch 1, dadurch gekennzeichnet, daß das Basispolymer in einer hellen Grundeinfärbung eingefärbt ist.

7. Formmasse nach Anspruch 1, dadurch gekennzeichnet, daß die pflanzlichen Naturfasern vor der Beimischung zum Basispolymer in einer Farbe eingefärbt wurden, die an die optische Abstimmung der Formteiloberfläche mit der Umgebung angepaßt ist.

8. Verwendung der Kunststoff-Formmasse nach Anspruch 1 zur Herstellung von Formteilen mit farblich abstimmbarem Dekoreffekt.
